# FASCICULE DE BREVET EUROPEEN

(11) **EP 3 297 428 B1**
(45) Date de publication et mention de la délivrance du brevet: **27.02.2019**
(21) Numéro de dépôt: 16726808.5
(22) Date de dépôt: 18.05.2016
(51) Int. Cl.: A01K 5/00

(54) **GODET DE CHARGEMENT, DE DÉCHARGEMENT ÉQUIPÉ D'UN ORGANE DE DÉMÊLAGE PERFECTIONNÉ**
SCHAUFEL ZUR AUFNAHME UND ZUR VERTEILUNG, VERSEHEN MIT VERBESSERTEN AUFLOCKERMITTELN
SCOOP FOR CHARGING AND DISCHARGING, PROVIDED WITH IMPROVED UNTANGLING MEANS

(30) Priorité: 18.05.2015 FR 1554414
(43) Date de publication de la demande: 28.03.2018
(73) Titulaire: Etablissements Emily, 29800 Tréflévénez (FR)
(72) Inventeur: MIOSSEC, Arnaud, 29440 Plouzevede (FR); RUNGOAT, David, 29800 Tréflévénez (FR)
(74) Mandataire: Cabinet Le Guen Maillet
(86) Numéro de dépôt international: PCT/EP2016/061104
(87) Numéro de publication internationale: WO 2016/184892

(56) Documents cités:
- EP-A1- 1 245 142
- DE-A1-102004 024 168
- DE-U1- 29 608 854
- FR-A1- 2 893 517

## Description

La présente invention concerne un godet de chargement et de déchargement susceptible d'être utilisé, en particulier, dans le domaine agricole.

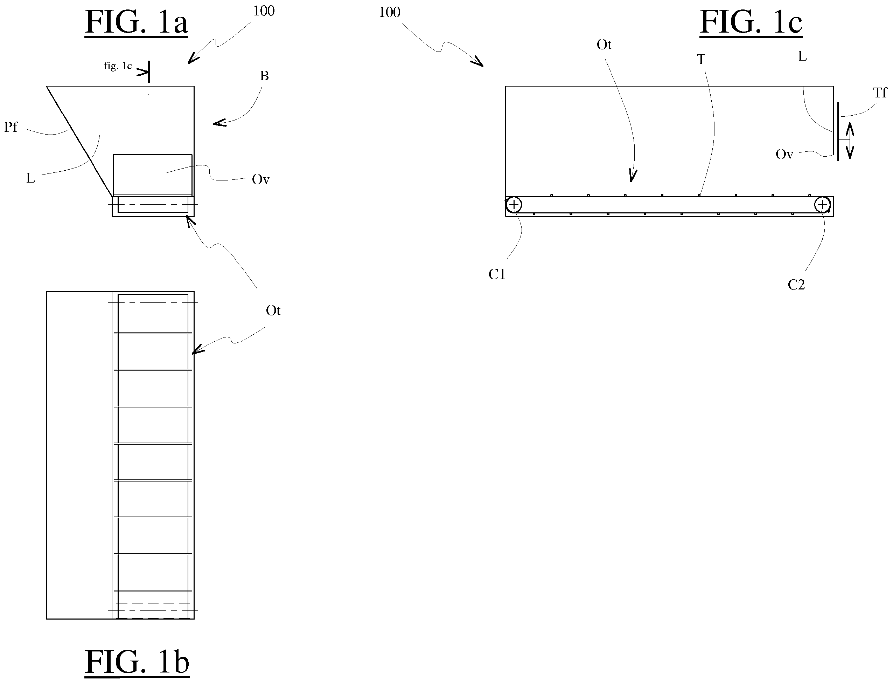

Pour distribuer du fourrage, il est connu d'utiliser un godet, tel que celui qui est présenté sur les Figs. 1. Il comprend une benne B ouverte sur le dessus dans sa position visible sur la Fig. la et dans laquelle est installé, au niveau de son fond, un organe de transfert Ot, comprenant des tasseaux T fixés sur deux chaînes circulant en boucle autour de pignons solidaires de deux cylindres C1 et C2 et dont l'un est relié à un moteur pour entraîner lesdits tasseaux sur une paroi de fond constitutive de la benne. Celle-ci est formée d'autres parois et dont au moins une paroi latérale L qui est traversée par une ouverture de vidange Ov au travers de laquelle la matière peut être sortie de la benne, sous l'effet du fonctionnement de l'organe de transfert Ot. Sur la Fig. 1, une trappe de fermeture Tf ferme, pendant le transport, l'ouverture de vidange. Sur la Fig. 1a, la benne B dispose d'une paroi frontale Pf montante et inclinée vers l'extérieur pour faciliter son chargement dans un tas, en inclinant vers l'avant à l'aide d'un engin porteur.

Certains fourrages, dont le maïs et plus particulièrement encore l'herbe ensilée, sont difficiles à vidanger dans un tel godet car la matière fibreuse s'agglutine au niveau de l'ouverture de vidange. Une machine agricole, appelée couramment « autochargeuse », permet de récolter de l'herbe et de la charger dans une remorque. Son mode de hachage de l'herbe produit des brins relativement longs, jusqu'à environ 50 cm. Ce fourrage est encore plus difficile à distribuer dans un godet. L'herbe agglomérée se tasse sous l'effet du déplacement de l'organe de transfert et forme un amas qui obstrue l'ouverture de vidange. En inversant périodiquement le sens de rotation du moteur d'entraînement de l'organe de transfert, on peut arriver à vidanger le godet, cependant son débit est irrégulier.

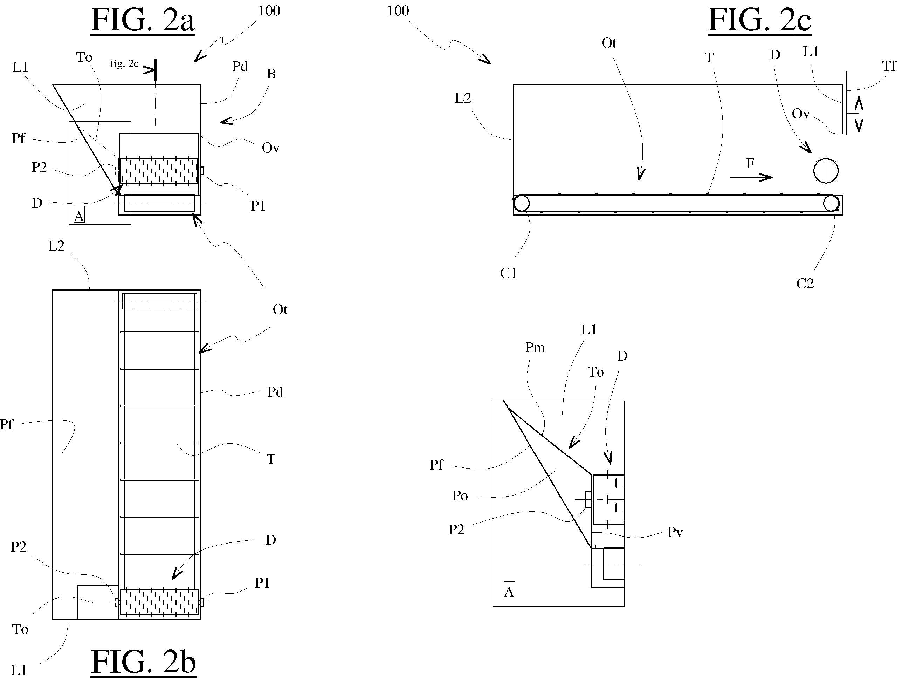

Pour pallier cet inconvénient, certains constructeurs ont aménagé ce type de godet en installant, dans la benne de celui-ci, un organe de démêlage D communément appelé démêleur. Un tel godet 100 est présenté sur les Figs. 2. Il se compose d'une benne B formée par deux parois latérales L1 et L2 réunies par une paroi frontale Pf et une paroi dorsale Pd, d'un organe de transfert Ot disposé dans le fond de la benne B.

Le démêleur D est constitué d'un rotor hérissé extérieurement, disposé transversalement dans la benne B et à proximité de l'ouverture Ov. Il est positionné au-dessus du cylindre C2 et parallèlement à lui. Il est susceptible d'être entraîné à rotation, par l'intermédiaire d'un second moteur. Son axe est tenu par l'intermédiaire de deux paliers P1 et P2 fixés respectivement sur la paroi dorsale Pd et sur la paroi frontale Pf. Sur les Figs. 2a et 2b, et de manière plus précise, la paroi frontale Pf étant inclinée, le palier P2 est fixé sur une tôle To attenante intérieurement à ladite paroi frontale ainsi qu'à la paroi latérale L1. La tôle To est constituée d'une pièce de chaudronnerie comprenant, sur la vue en détail A extraite de la Fig. 2a, une paroi verticale Pv à l'arrière de laquelle est fixé le palier P2, prolongée par une paroi oblique montante Pm et qui rejoint la paroi frontale Pf. Une troisième paroi verticale Po obture, à l'intérieur de la benne B, le passage entre les deux autres parois de la tôle To.

Lorsque le godet 100 a été chargé et que l'on souhaite le vidanger, on ouvre la trappe Tf, et l'on commande le fonctionnement de l'organe de transfert Ot et du démêleur D. Les tasseaux T se déplacent alors en direction de l'ouverture Ov, comme le suggère la flèche F sur la Fig. 2c. Le fonctionnement du démêleur D facilite la vidange et régule le débit de vidange. Pendant sa rotation, il décompacte la matière acheminée par les tasseaux T en vis-à-vis de l'ouverture Ov. Cependant il arrive que de la matière s'agglutine sur la paroi oblique Pm formant un déflecteur. De la matière s'agglutine également à l'arrière de la troisième paroi verticale d'obturation Po. Cet amas de matière suffit pour ralentir la sortie de la matière au travers de l'ouverture Ov, le démêleur D ne parvenant pas à décompacter cet amas latéral. La distribution de la matière est pour le moins irrégulière.

Par ailleurs, on connaît à la lecture du brevet DE-A1-10 2004 024168, un chargeur frontal utilisé dans le domaine agricole pour nourrir les animaux. Il est monté sur un engin de levage capable de le manoeuvrer. Il comprend un godet pourvu d'une paroi frontale inclinée, d'une paroi dorsale également inclinée comprenant un moyen d'attelage et de deux parois latérales réunissant la paroi frontale et la paroi dorsale. Un convoyeur à chaînes et à tasseaux est monté dans le fond du godet pour vidanger son contenu.

Le document DE29608854U1 divulgue un outil de désilage et de distribution.

Connaissant cet état de la technique, le demandeur a cherché une solution pour concevoir un godet équipé d'un organe de transfert, d'un démêleur et qui puisse distribuer régulièrement la matière qu'il contient et notamment un fourrage à fibres longues.

A cet effet, est proposé un godet selon la revendication 1, destiné à charger et à décharger des matières, comprenant une benne délimitant un contenant pour la matière, comprenant une paroi dorsale porteuse d'un moyen d'attelage avec un engin porteur, une paroi frontale inclinée et montante vers l'extérieur, dans la position normale de déchargement dudit godet, pour faciliter le chargement du godet dans un tas,
un moyen de transfert formant un organe de vidange disposé dans le fond de la benne,
une ouverture latérale traversant la benne pour vidanger la matière hors du godet pendant le fonctionnement dudit moyen de transfert,
un organe de démêlage disposé dans la benne en vis-à-vis de ladite ouverture, ledit organe de démêlage comprenant un rotor hérissé extérieurement et susceptible d'être entraîné à rotation pour défragmenter la matière acheminée par le moyen de transfert afin de la projeter au travers de ladite ouverture,
selon l'invention, l'organe de démêlage est fixé d'un seul côté sur la paroi dorsale ou sur la paroi frontale, et une distance (d) sépare l'extrémité libre dudit rotor hérissé, de la paroi frontale ou de la paroi dorsale, la distance (d) requise étant *minima*, pour permettre à la matière de descendre entre la paroi frontale oblique ou la paroi dorsale et l'extrémité dégagée du rotor hérissé.

Ce montage particulier de l'organe de démêlage en porte à faux permet à la matière en contact avec la paroi dorsale ou la paroi oblique, dans la position de déchargement du godet, de glisser jusque sur le moyen de transfert, sans former d'amas devant l'ouverture de déchargement. La vidange du godet est continue et régulière.

Selon une caractéristique additionnelle de l'invention, l'organe de démêlage est fixé d'un seul côté sur la paroi dorsale.

La matière peut descendre entre la paroi frontale oblique et l'extrémité dégagée du rotor hérissé.

Selon une caractéristique additionnelle de l'invention, l'organe de démêlage comprend un pot fixé sur la paroi dorsale, et dans lequel est monté un moteur, le rotor hérissé étant monté autour dudit pot et fixé sur l'axe dudit moteur.

Le rotor est tenu globalement au niveau de sa partie médiane, à mi- longueur. Cette construction équilibre les efforts, de part et d'autre de sa fixation sur le moteur, qu'il subit en fonctionnement.

Selon une caractéristique additionnelle de l'invention, le rotor hérissé comprend au moins une portion cylindrique et autour de laquelle sont fixés des moyens de décompactage.

Ces moyens de décompactage défragmentent la formation d'amas susceptibles de se former en vis-à-vis de l'ouverture de déchargement, pendant le fonctionnement du tapis roulant.

Selon une caractéristique additionnelle de l'invention, la benne comprend au moins une paroi latérale réunissant la paroi dorsale et la paroi frontale, ladite ouverture traversant ladite paroi latérale.

La matière peut être évacuée au travers de l'ouverture traversant la paroi latérale.

Selon une caractéristique additionnelle de l'invention, un moyen d'obturation ferme normalement ladite ouverture de déchargement hors des périodes de vidange, le moyen d'obturation comprenant une plaque montée de manière articulée sur ladite paroi latérale à l'extérieur de celle-ci et au-dessus de ladite ouverture ou une bavette externe tenue au-dessus de ladite ouverture.

Le moyen d'obturation sert également de déflecteur suivant son degré d'ouverture, qu'il soit commandé ou ouvert sous la poussée de la matière.

Selon une caractéristique additionnelle de l'invention, la benne comprend deux parois latérales qui sont respectivement traversées par deux ouvertures et deux organes de démêlage sont montés dans la benne respectivement en vis-à-vis des deux ouvertures.

Le godet peut ainsi distribuer son contenu indifféremment d'un bord ou de l'autre, c'est-à-dire à gauche ou à droite de l'engin porteur.

Selon une caractéristique additionnelle de l'invention, le godet est pourvu d'un organe de désilage.

Cet organe de désilage favorise le chargement de la benne du godet.

Selon une caractéristique additionnelle de l'invention, le sens de rotation du rotor est défini de telle manière que le rotor puisse arracher par le haut la matière acheminée par le moyen de transfert en direction dudit rotor.

La matière déplacée par le moyen de transfert est défragmentée par le dessus, c'est-à-dire dans un espace libre, puis elle est projetée au travers de l'ouverture latérale pour sortir du godet.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. la représente une vue latérale d'un godet de chargement et de déchargement connu de l'état de la technique,
la Fig. 1b représente une vue de dessus d'un godet de chargement et de déchargement connu de l'état de la technique,
la Fig. 1c représente une vue de face en coupe d'un godet de chargement et de déchargement connu de l'état de la technique,
Les Figs. 2 représentent un godet selon les Figs. 1 et qui est équipé d'un organe de démêlage, connu de l'état de la technique,
la Fig. 3a représente une vue latérale d'un godet de chargement et de déchargement, dans sa position de déchargement, selon l'invention,
la Fig. 3b représente une vue de dessus d'un godet de chargement et de déchargement selon l'invention,
la Fig. 3c représente une vue de face en coupe d'un godet de chargement et de déchargement et dont l'organe de démêlage qu'il comporte tourne dans un sens de rotation selon l'invention,
la Fig. 3d représente une vue de face en coupe d'un godet de chargement et de déchargement et dont le sens de rotation de son organe de démêlage est inversé selon l'invention,
la Fig. 4a représente une vue latérale d'une variante de réalisation d'un godet de chargement et de déchargement, dans sa position de déchargement, selon l'invention,
la Fig. 4b représente une vue de dessus d'une variante de réalisation d'un godet de chargement et de déchargement selon l'invention et,
la Fig. 4c représente une vue de face en coupe d'une variante de réalisation d'un godet de chargement et de déchargement selon l'invention.

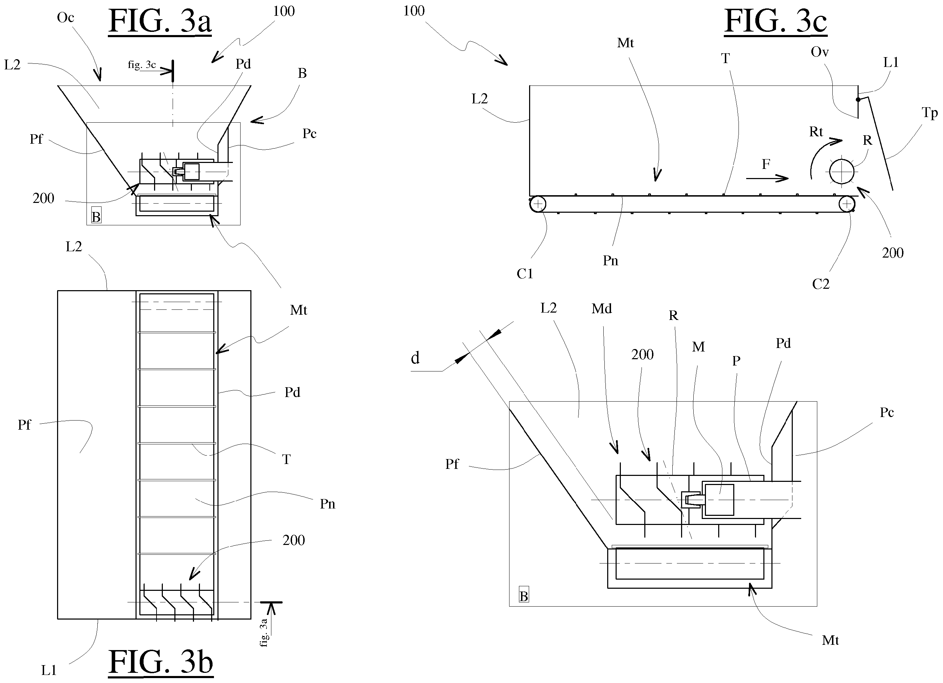

Le godet 100 présenté sur les Figs. 3 est destiné à être attelé à un engin de levage pour le transporter, puis le charger d'une matière et ensuite le transporter à nouveau vers un lieu de vidange, de distribution où la matière est extraite du godet.

Il convient particulièrement pour distribuer du fourrage, tel du maïs ensilé, de l'herbe ensilée. Il trouve des applications dans le domaine agricole.

Le godet 100 se compose d'une benne B équipée d'un moyen d'attelage, non représenté, pour un engin de levage, typiquement un tracteur agricole, un engin porteur équipé d'un bras télescopique.

La benne B se compose d'au moins une paroi latérale et sur ces Figs. 3, de deux parois latérales L1 et L2, réunies par une paroi frontale Pf, une paroi dorsale Pd porteuse du moyen d'attelage, non représenté, d'une paroi de fond Pn. Sur la Fig. 3a, montrant le godet dans sa position normale de déchargement, c'est-à-dire avec son ouverture de chargement Oc tournée vers le haut, la paroi frontale Pf est inclinée et montante vers l'extérieur pour faciliter le chargement du godet dans un tas. Elle forme en principe un angle aigu avec la paroi dorsale Pd. Celle-ci s'étend en principe verticalement ou quasi verticalement dans la position de déchargement du godet.

Sur la Fig. 3c, un moyen de transfert Mt est installé au niveau du fond de la benne B. Il est préférentiellement constitué de tasseaux T fixés au niveau de leurs deux extrémités sur deux chaînes pouvant circuler en boucle autour de pignons solidaires de deux cylindres C1 et C2 et dont l'un est relié à un moyen d'entraînement à rotation, tel qu'un motoréducteur, pour entraîner lesdits tasseaux T. Dans leur trajet supérieur, les tasseaux T circulent sur la paroi de fond Pn et peuvent ainsi déplacer latéralement la matière contenue dans la benne B, en direction d'une paroi latérale L.

Le motoréducteur est de préférence du type hydraulique afin de pouvoir être alimenté par le circuit hydraulique de l'engin porteur. Le choix de ce type de moyen de transfert est avantageux, car il est adapté pour distribuer du fourrage. A efficacité égale, il consomme moins de puissance qu'une vis hélicoïdale.

La benne B du godet 100 de l'invention peut cependant être équipée d'un autre type de moyen de transfert de la matière. Une vis hélicoïdale de relativement grand diamètre disposée longitudinalement dans la benne et susceptible d'être entraînée à rotation par l'intermédiaire d'un moteur, convient. On peut également utiliser plusieurs vis hélicoïdales de diamètre plus petit et qui sont disposées parallèlement entre elles. On peut encore utiliser un fond poussant comprenant une plaque disposée parallèlement à une paroi latérale et qui peut être déplacée latéralement, par l'intermédiaire d'un moyen de manoeuvre, pour déplacer la matière contenue dans la benne en direction de l'autre paroi latérale.

Au moins l'une des parois latérales L est traversée par une ouverture Ov qui apparaît dans le prolongement du moyen de transfert Mt pour permettre à la matière déplacée par celui-ci, de sortir hors de la benne B. Un moyen d'obturation, tel qu'une trappe de fermeture Tp, est disposé devant ladite ouverture Ov pour contenir la matière à l'intérieur de la benne quand elle n'est pas distribuée. La trappe de fermeture est constituée d'une plaque montée de manière articulée sur ladite paroi à l'extérieur de celle-ci et au-dessus de l'ouverture Ov. Au moins un moyen d'entraînement, tel qu'un vérin hydraulique, non représenté, interposé entre la benne et la trappe de fermeture permet de la dégager de ladite ouverture par un pivotement vertical. A faible ouverture, la trappe sert également de déflecteur pour canaliser la matière extraite du godet afin qu'elle puisse tomber en contrebas, par exemple dans une mangeoire. Le moyen d'obturation peut encore être constitué d'une simple bavette externe tenue au-dessus de l'ouverture. Pendant la vidange, la matière repousse la bavette pour finalement retomber en contrebas.

On remarquera que ladite paroi latérale peut, dans une variante de réalisation du godet, non représentée, être absente. L'ouverture de déchargement dégage alors toute la surface latérale d'un côté de la benne. Le moyen d'obturation recouvre, dans sa position de fermeture, toute la surface de l'ouverture de dégagement.

Un organe de démêlage 200 est installé dans la benne B pour défragmenter la matière déplacée vers l'ouverture Ov sous l'effet du fonctionnement du moyen de transfert Mt. Il comprend un rotor R hérissé extérieurement, disposé de préférence transversalement dans la benne B et à proximité de l'ouverture Ov. Il est positionné au-dessus du cylindre C2 et parallèlement à lui. Le rotor R est susceptible d'être entraîné à rotation, par l'intermédiaire d'un moyen d'entraînement constitué préférentiellement d'un moteur hydraulique M.

Le sens de rotation du rotor R est matérialisé par la flèche Rt. Son sens de rotation est défini de telle manière que le rotor R puisse arracher par le haut la matière acheminée par le moyen de transfert Mt et dont le sens de déplacement est matérialisé par la flèche F. Sur la Fig. 3c, le sens de rotation Rt est le sens horaire alors que la flèche F est dirigée vers la droite. La matière arrachée est ensuite projetée par-dessus le rotor R pour sortir au travers de l'ouverture Ov.

Dans une variante de réalisation présentée sur la Fig. 3d, le sens de rotation du rotor R est inversé et il est matérialisé par la flèche -Rt. Il arrache par le bas la matière acheminée par le moyen de transfert Mt. L'axe du rotor R est également positionné plus haut. Bien que cette construction soit moins efficace en termes de régularité de débit de vidange du fait que la matière est compressée sur le lit de matière transportée par le moyen de transfert Mt, elle présente l'avantage de moins projeter de matière vers le haut et de décomprimer la sortie de la matière vers le haut.

Dans une variante de réalisation, non représentée, l'organe de démêlage 200 est entraîné par le même motoréducteur d'entraînement du moyen de transfert, à l'aide d'une transmission.

Dans l'invention, et en référence à la Fig. 3a, l'axe de l'organe de démêlage 200 est tenu d'un seul côté de la benne B et préférentiellement du côté de la paroi dorsale Pd. Le côté opposé du rotor hérissé R est dégagé de la paroi frontale Pf, d'une distance d, comme cela apparaît sur la vue en détail B extraite de cette Fig. 3a. Il en résulte que, pendant la vidange du godet, la matière présente sur la paroi frontale Pf oblique au droit de l'organe de démêlage 200 n'est plus coincée et glisse vers le fond de la benne, sur sa paroi de fond. Elle descend sans former d'amalgame au risque de fermer au moins partiellement l'ouverture Ov. La vidange, la distribution de la matière est régulière.

La distance d requise est *minima*, elle est de l'ordre de quelques centimètres, c'est-à-dire une distance suffisante pour permettre à la matière de descendre entre la paroi frontale Pf oblique et l'extrémité dégagée du rotor hérissé.

Sur la vue en détail B de la Fig. 3a, un pot P fait saillie à l'intérieur du rotor R et le moteur M est logé et fixé à l'intérieur du pot P, de sorte que son axe ressorte dudit pot. Un disque est fixé à l'intérieur du rotor R, vers sa mi-longueur et une frette, de préférence conique, est fixée dans celui-ci, en étant montée sur l'axe dudit moteur afin qu'il puisse l'entraîner à rotation. Les efforts que la matière exerce sur le rotor R sont ainsi répartis de chaque côté de sa liaison avec le moteur M.

Le pot P est fixé sur la paroi dorsale Pd. Il est monté au travers d'un passage réalisé au travers de la paroi dorsale Pd. Il ressort à l'arrière de ladite paroi dorsale. Il est fixé par un cordon de soudure dans ledit passage. Une pièce de chaudronnerie Pc est fixée à l'arrière de la paroi dorsale Pd, et dans laquelle est fixée la partie du pot P qui ressort à l'arrière de ladite paroi dorsale afin de renforcer la liaison mécanique du pot P avec la benne.

Sur la vue en détail B, le rotor R est formé d'un cylindre et à l'extérieur duquel sont fixés des moyens de décompactage Md. Ils sont formés, sur cette vue en détail B, de portions de disques reliés par des portions d'hélicoïdes. Ce hérissement permet de décompacter un amalgame en cours de formation sous l'effet du fonctionnement du moyen de transfert Mt, en dégageant latéralement la matière. D'autres formes de hérissements sont possibles, par exemple des couteaux fixés autour du cylindre, des peignes en forme de dents de scie fixés longitudinalement sur le rotor.

La longueur du cylindre R est sensiblement égale, voire supérieure à la largeur des tasseaux T du moyen de transfert Mt. Le cylindre R est également positionné au-dessus des tasseaux T sans être décalé latéralement par rapport à eux. Cette construction permet au démêleur 200 de travailler sur toute la surface de transport de la matière.

Dans une variante de réalisation non représentée, l'axe de l'organe de démêlage est tenu du côté de la paroi frontale. L'extrémité libre du rotor est séparée de la paroi dorsale, là encore, d'une distance relativement faible.

Le fonctionnement du godet 100 de l'invention se présente de la manière suivante. On attelle le godet à un engin porteur. On le charge d'un fourrage, par exemple provenant d'un silo, puis on le déplace sur le lieu où il convient de le distribuer, par exemple dans des mangeoires. S'agissant d'une trappe de fermeture mécanique, le conducteur de l'engin commande son ouverture ainsi que le fonctionnement de l'organe de démêlage 200 et du moyen de transfert Mt. La matière déplacée par celui-ci en direction de l'ouverture Ov est complètement décompactée par le rotor R. Le débit de vidange est continu et régulier.

Le godet de l'invention apporte significativement une meilleure efficacité pour distribuer certains produits comme l'ensilage de maïs, l'ensilage d'herbe à brins courts ou à brins longs.

Son prix de fabrication est comparable à celui d'un godet du même type, c'est-à-dire pourvu d'un démêleur et connu de l'art antérieur.

Dans une variante de réalisation, non présentée, Le cylindre est étagé et son extrémité libre présente un diamètre plus faible pour dégager davantage la paroi frontale Pf. Ladite extrémité peut encore présenter une géométrie conique. Le moyen de décompactage peut faire saillie au-delà de l'extrémité du rotor pour attraper et extraire la matière entre le rotor et la paroi frontale.

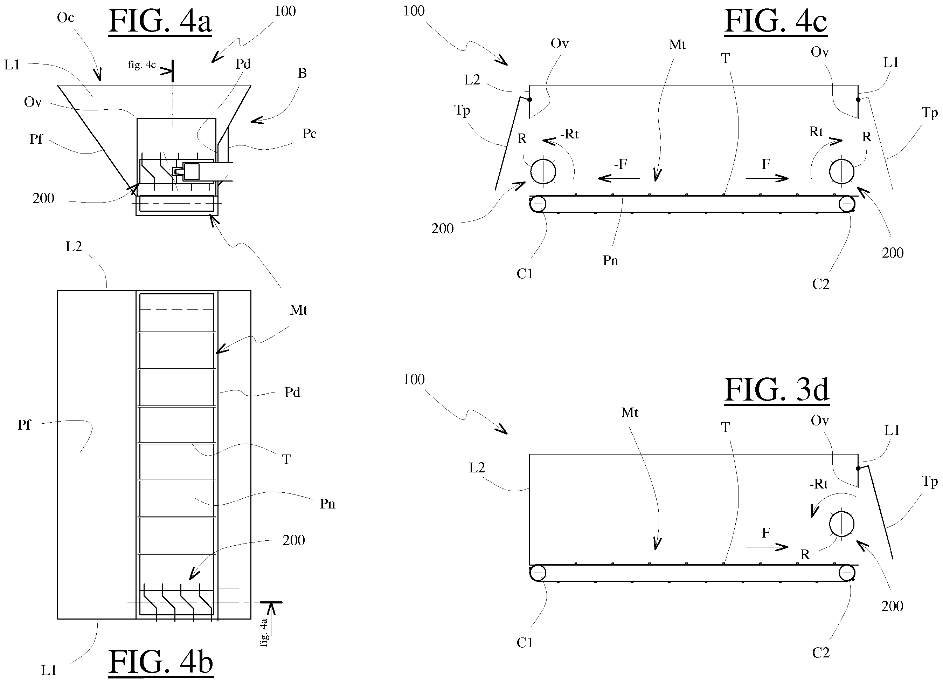

Dans une autre variante de réalisation du godet de l'invention, représentée sur les Figs. 4, les deux parois latérales L1 et L2 sont traversées respectivement de deux ouvertures Ov de déchargement et sont équipées de deux trappes de fermeture Tp ou de deux bavettes de fermeture (non représentées). Le godet 100 est également équipé de deux organes de démêlage 200 disposés transversalement dans la benne et en vis-à-vis des deux ouvertures Ov. En fonctionnement, seule l'une des trappes de fermeture Tp demeure ouverte et seul l'un des rotors R est entraîné en rotation en fonction du côté de vidange défini par le sens de déplacement F ou -F du moyen de transfert Mt.

Ainsi, il est possible de choisir le côté de vidange de la benne B au regard de l'engin porteur, soit de son côté gauche, soit son côté droit.

Le godet 100 de l'invention peut être pourvu d'un organe de désilage, non représenté, pour permettre le chargement de sa benne. Cet organe se compose de deux bras respectivement montés de manière articulée sur les deux parois latérales de la benne et qui sont réunis par une traverse porteuse de crocs. Au moins un vérin ancré, d'une part, sur un bras et, d'autre part, sur une paroi latérale permet de faire descendre les crocs dans un silo pour extraire du fourrage et le charger dans la benne, la paroi frontale Pf de celle-ci étant posée au sol, devant le silo par basculement du godet par l'engin porteur.

## Revendications

1. Godet (100) destiné à charger et à décharger des matières, comprenant :
- une benne (B) délimitant un contenant pour la matière, comprenant une paroi dorsale (Pd) porteuse d'un moyen d'attelage avec un engin porteur, une paroi frontale (Pf) inclinée et montante vers l'extérieur, dans la position normale de déchargement dudit godet, pour faciliter le chargement du godet dans un tas,
- un moyen de transfert (Mt) formant un organe de vidange disposé dans le fond de la benne,
- une ouverture latérale (Ov) traversant la benne (B) pour vidanger la matière hors du godet pendant le fonctionnement dudit moyen de transfert,
- un organe de démêlage (D) disposé dans la benne (B) en vis-à-vis de ladite ouverture (Ov), ledit organe de démêlage comprenant un rotor (R) hérissé extérieurement et susceptible d'être entraîné à rotation pour défragmenter la matière acheminée par le moyen de transfert (Mt) afin de la projeter au travers de ladite ouverture (Ov), l'organe de démêlage (200) étant fixé d'un seul côté sur la paroi dorsale (Pd) ou sur la paroi frontale (Pf), et une distance (d) séparant l'extrémité libre dudit rotor hérissé (R), de la paroi frontale (Pf) ou de la paroi dorsale (Pd), la distance (d) requise étant *minima*, la distance (d) étant de l'ordre de quelques centimètres, pour permettre à la matière de descendre entre la paroi frontale (Pf) oblique ou la paroi dorsale (Pd) et l'extrémité dégagée du rotor hérissé (R).

2. Godet (100) selon la revendication 1, **caractérisé en ce que** l'organe de démêlage (200) est fixé d'un seul côté sur la paroi dorsale (Pd).

3. Godet (100) selon la revendication 2, **caractérisé en ce que** l'organe de démêlage (200) comprend un pot (P) fixé sur la paroi dorsale (Pd), et dans lequel est monté un moteur (M), le rotor hérissé (R) étant monté autour dudit pot et fixé sur l'axe dudit moteur.

4. Godet (100) selon la revendication 1, 2 ou 3, **caractérisé en ce que** le rotor hérissé (R) comprend au moins une portion cylindrique et autour de laquelle sont fixés des moyens de décompactage (Md).

5. Godet (100) selon l'une quelconque des revendications précédentes, **caractérisé en ce que** la benne (B) comprend au moins une paroi latérale (L1) réunissant la paroi dorsale (Pd) et la paroi frontale (Pf), ladite ouverture (Ov) traversant ladite paroi latérale (L).

6. Godet (100) selon la revendication 5, **caractérisé en ce qu'**un moyen d'obturation ferme normalement ladite ouverture (Ov) de déchargement hors des périodes de vidange, le moyen d'obturation comprenant une plaque (Tp) montée de manière articulée sur ladite paroi latérale (L) à l'extérieur de celle-ci et au-dessus de ladite ouverture (Ov) ou une bavette externe tenue au-dessus de ladite ouverture.

7. Godet (100) selon la revendication 5 ou 6, **caractérisé en ce que** la benne (B) comprend deux parois latérales (L1, L2) qui sont respectivement traversées par deux ouvertures (Ov) et **en ce que** deux organes de démêlage (200) sont montés dans la benne (B) respectivement en vis-à-vis des deux ouvertures (Ov).

8. Godet (100) selon l'une quelconque des revendications précédentes, **caractérisé en ce qu'**il est pourvu d'un organe de désilage.

9. Godet (100) selon l'une quelconque des revendications précédentes, **caractérisé en ce que** le sens de rotation (Rt) du rotor (R) est défini de telle manière que le rotor (R) puisse arracher par le haut la matière acheminée par le moyen de transfert (Mt) en direction dudit rotor.

## Patentansprüche

1. Schaufel (100) zum Laden und Entladen von Materialien, die Folgendes umfasst:
- einen Kübel (B) der einen Behälter für das Material begrenzt, bestehend aus einer Rückwand (Pd), die eine Vorrichtung zur Kopplung mit einem Trägergerät trägt, einer Vorderwand (Pf), die in der normalen Entladeposition der Schaufel geneigt ist und nach außen ansteigt, um das Beladen der Schaufel in einem Stapel zu erleichtern,
- eine Transportvorrichtung (Mt), die ein Entleerungsorgan am Boden des Kübels bildet,
- eine seitliche Öffnung (Ov), die durch den Kübel (B) hindurchgeht, um das Material während des Betriebs der Transportvorrichtung aus der Schaufel zu entleeren,
- ein Entflechtungsorgan (D), das im Kübel (B) gegenüber der Öffnung (Ov) angebracht ist, wobei das Entflechtungsorgan aus einer Walze (R) besteht, die auf der Außenseite mit Stacheln versehen ist und zur Drehung angetrieben werden kann, um das von der Transportvorrichtung (Mt) herbeigeführte Material zu defragmentieren, um es durch die Öffnung (Ov) auszuwerfen, wobei das Entflechtungsorgan (200) mit einer Seite an der Rückwand (Pd) oder der Vorderwand (Pf) befestigt ist, und ein Abstand (d) das freie Ende der Stachelwalze (R) von der Vorderwand (Pf) oder der Rückwand (Pd) trennt, wobei der erforderliche Abstand (d) geringfügig ist, wobei der Abstand (d) die Größenordnung von einigen Zentimetern hat, um es dem Material zu ermöglichen, zwischen der schrägen Vorderwand (Pf) oder der Rückwand (Pd) und dem freien Ende der Stachelwalze (R) herabzufallen.

2. Schaufel (100) nach Anspruch 1, dadurch gekennzeichet, dass das Entflechtungsorgan (200) mit einer Seite an der Rückwand (Pd) befestigt ist.

3. Schaufel (100) nach Anspruch 2, dadurch gekennzeichet, dass das Entflechtungsorgan (200) einen Topf (P) umfasst, der an der Rückwand (Pd) angebracht ist und in dem ein Motor (M) montiert ist, wobei die Stachelwalze (R) um den Topf montiert und auf der Achse des Motors befestigt ist.

4. Schaufel (100) nach Anspruch 1, 2 oder 3, dadurch gekennzeichet, dass die Stachelwalze (R) mindestens einen zylindrischen Abschnitt umfasst, um den herum Auflockerungsvorrichtungen (Md) befestigt sind.

5. Schaufel (100) nach einem der vorhergehenden Ansprüche, dadurch gekennzeichet, dass der Kübel (B) mindestens eine Seitenwand (L1) umfasst, die die Rückwand (Pd) und die Vorderwand (Pf) miteinander verbindet, wobei die Öffnung (Ov) durch die Seitenwand (L) hindurchgeht.

6. Schaufel (100) nach Anspruch 5, dadurch gekennzeichet, dass eine Verschlussvorrichtung normalerweise die Öffnung (Ov) zur Entladung außerhalb der Entladeperioden verschließt, wobei die Verschlussvorrichtung eine Platte (Tp) umfasst, die gelenkig auf der Seitenwand (L), außerhalb von dieser und oberhalb der Öffnung (Ov) angebracht ist, oder eine externe Klappe, die oberhalb der Öffnung gehalten wird.

7. Schaufel (100) nach Anspruch 5 oder 6, dadurch gekennzeichet, dass der Kübel (B) zwei Seitenwände umfasst (L1, L2), die jeweils von zwei Öffnungen (Ov) so durchdrungen werden, dass zwei Entflechtungsorgane (200) in dem Kübel (B) angebracht sind, jeweils gegenüber den beiden Öffnungen (Ov).

8. Schaufel (100) nach einem der vorhergehenden Ansprüche, dadurch gekennzeichet, dass sie mit einem Silo-Entnahmeorgan ausgestattet ist.

9. Schaufel (100) nach einem der vorhergehenden Ansprüche, dadurch gekennzeichet, dass die Drehrichtung (Rt) der Walze (R) so festgelegt ist, dass die Walze (R) das von der Transportvorrichtung (Mt) in Richtung der Walze herbeigeführte Material von oben herausziehen kann.

## Claims

1. Scoop (100) intended for loading and unloading matter, comprising:
- a bucket (B) delimiting a container for the matter, comprising a dorsal wall (Pd) bearing a means of attachment to a carrying vehicle, a frontal wall (Pf) that is inclined upwards and outwards, when the said scoop is in the normal unloading position, so as to facilitate the loading of the bucket in a heap,
- a transfer means (Mt) forming an emptying member arranged in the bottom of the bucket,
- a lateral opening (Ov) passing through the bucket (B) for emptying the matter from the bucket while the said transfer means is in operation,
- an untangling means (D) arranged in the bucket (B) facing the said opening (Ov), the said untangling member comprising an externally spiked rotor (R) capable of being turned in order to defragment the matter carried by the transfer means (Mt) in order to throw it through the said opening (Ov), the untangling member (200) being fixed on just one side to the dorsal wall (Pd) or to the frontal wall (Pf), and a distance (d) separating the free end of the said spiked rotor (R) from the frontal wall (Pf) or from the dorsal wall (Pd), the distance (d) required being *minimal*, the distance (d) being of the order of a few centimetres, so as to allow the matter to drop down between the oblique frontal wall (Pf) or the dorsal wall (Pd) and the clear end of the spiked rotor (R).

2. Scoop (100) according to Claim 1, **characterized in that** the untangling member (200) is fixed on just one side to the dorsal wall (Pd).

3. Scoop (100) according to Claim 2, **characterized in that** the untangling member (200) comprises a pot (P) fixed on the dorsal wall (Pd) and in which a motor (M) is mounted, the spiked rotor (R) being mounted around the said pot and fixed to the shaft of the said motor.

4. Scoop (100) according to Claim 1, 2 or 3, **characterized in that** the spiked rotor (R) comprises at least one cylindrical portion around which decom-paction means (Md) are fixed.

5. Scoop (100) according to any one of the preceding claims, **characterized in that** the bucket (B) comprises at least one lateral wall (L1) connecting the dorsal wall (Pd) and the frontal wall (Pf), the said opening (Ov) passing through the said lateral wall (L).

6. Scoop (100) according to Claim 5, **characterized in that** a shut-off means normally closes the said unloading opening (Ov) outside of periods of emptying, the shut-off means comprising a plate (Tp) mounted in an articulated manner on the said lateral wall (L) on the outside thereof and above the said opening (Ov) or an external apron stretched over the said opening.

7. Scoop (100) according to Claim 5 or 6, **characterized in that** the bucket (B) comprises two lateral walls (L1, L2) through which two respective openings (Ov) pass and **in that** two untangling members (200) are mounted in the bucket (B) respectively facing the two openings (Ov).

8. Scoop (100) according to any one of the preceding claims, **characterized in that** it is provided with a silo unloading member.

9. Scoop (100) according to any one of the preceding claims, **characterized in that** the direction of rotation (Rt) of the rotor (R) is defined in such a way that the rotor (R) can snatch from above matter carried by the transfer means (Mt) towards the said rotor.
